# EUROPÄISCHE PATENTSCHRIFT

(11) **EP 2 151 592 B1**
(45) Veröffentlichungstag und Bekanntmachung des Hinweises auf die Patenterteilung: **29.08.2012**
(21) Anmeldenummer: 09165502.7
(22) Anmeldetag: 15.07.2009
(51) Int. Cl.: E04G 17/00

(54) **Verfahren zur vorübergehenden Befestigung eines Schalungsteils an einem Konstruktionselement mittels eines nagelförmigen Befestigungselements**
Method for temporarily fixing a shuttering element to a construction body by means of a nail-like fixing element
Procédé de fixation d'un élément de coffrage à un élément de construction au moyen d'un dispositif de fixation en forme de clou

(30) Priorität: 06.08.2008 DE 102008041036
(43) Veröffentlichungstag der Anmeldung: 10.02.2010
(73) Patentinhaber: HILTI Aktiengesellschaft, 9494 Schaan (LI)
(72) Erfinder: Foser, Thomas, 9496, Balzers (LI); Lor, Ferenc, 9470, Buchs (CH); Bönig, Stefan, 88147, Achberg-Esseratsweiler (DE)

(56) Entgegenhaltungen:
- WO-A1-2007/105733
- JP-U- 52 019 563
- US-A1- 2007 107 199

## Beschreibung

Die vorliegende Erfindung betrifft ein Verfahren zur vorübergehenden Befestigung eines Schalungsteils an einem Konstruktionselement, bei dem ein nagelförmiges Befestigungselement in das Konstruktionselement eingetrieben wird, gemäß Patentanspruch 1.

Derartige Befestigungselemente, wie z.B. Nägel aus Stahl, werden in der Befestigungstechnik z. B. zum Befestigen von Bauelementen, wie beispielsweise Schalungen, an harten Werkstoffen, wie Beton, Metall oder Gestein, verwendet. Die Befestigungselemente weisen dazu einen Schaft mit einer sich in Setzrichtung verjüngenden Spitze und einem am anderen Ende des Schaftes liegenden Kopf auf, welcher gegenüber dem Durchmesser des Schaftes vergrössert ist.

Aus der US 2 171 877 ist ein als Nagel ausgebildetes Befestigungselement mit einem Kopf und einem sich daran anschliessenden und in einer Spitze endenden Schaft bekannt. Auf den Schaft ist eine, als kegelförmige Hülse ausgebildete, Rondelle aufgezogen, deren grösster Querschnitt an ihrem der Spitze zugewandten Ende liegt. Ein derartiger Nagel ist z. B. dazu geeignet mit einem Hammer in ein Werkstück eingetrieben zu werden, wobei die kegelförmige Hülse als Abstandhalter fungiert, der nach dem Einschlagen des Nagels den Kopf von der Oberfläche des Werkstücks beabstandet, so dass der Nagel wieder aus dem Werkstück herausgezogen werden kann.

Von Nachteil bei diesem Nagel ist jedoch, dass er nicht zum Einschlagen mittels eines, z. B. brennkraftbetriebenen, Setzgerätes geeignet ist, da die kegelförmige Hülse auf Grund der hohen Einschlagenergie solcher Setzgeräte mit in das Werkstück eingeschlagen würde oder auf dem Werkstück zerspleissen würde.

Aus der US 1 705 371 ist ferner noch ein so genannter Doppelkopfnagel bekannt, der an seinem der Spitze gegenüberliegenden Ende zwei Köpfe aufweist. Der der Spitze zugewandte und als umlaufender Wulst oder Bund ausgebildete untere Kopf dient dabei als Eintreib- oder Einschlagbegrenzung des Nagels, während der zweite Nagelkopf nach dem Einschlagen in ein Werkstück von dessen Oberfläche beabstandet ist, so dass der Nagel über ein an dem zweiten Kopf angesetztes Werkzeug wieder aus dem Werkstück herausgezogen werden kann.

Von Nachteil bei derartigen Nägeln ist jedoch zum einen die aufwändige Herstellung und zum anderen ihre geringe Variabilität in der Anwendung.

Ein dem im Anspruch 1 angegebenen nagelförmigen Befestigungselement entsprechendes Befestigungselement ist aus der US 2007/0107199 schon bekannt.

Die Aufgabe der vorliegenden Erfindung liegt darin, die oben genannten Nachteile zu vermeiden und ein nagelförmiges Befestigungselement bereitzustellen, das zur Befestigung eines Schalungsteils mittels eines Setzgerätes setzbar ist und trotzdem noch eine Angriffsstelle bietet, an der ein Ausziehwerkzeug angreifen kann.

Die Aufgabe wird durch ein Verfahren mit den in Patentanspruch 1 genannten Merkmalen gelöst. Demnach weist die hülsenförmige Rondelle des im Verfahren verwendeten Befestigungselements an einem der Spitze zugewandten ersten Ende einen den Öffnungsquerschnitt der hülsenförmigen Rondelle verengenden ersten Bund auf und an einem dem ersten Ende gegenüberliegenden zweiten Ende einen umfänglich aussen angeordneten zweiten Bund auf. So kann das Befestigungselement u. a. auch mit brennkraftbetriebenen Setzgeräten gesetzt werden, ohne dass die hülsenförmige Rondelle in das Werkstück eingeschlagen oder auf dem Werkstück zerspleissen würde. Streuungen der Eindringtiefen bei dem Setzen des Befestigungselements mittels Setzgeräten werden von der hülsenförmigen Rondelle kompensiert. Somit ist das befestigte Material immer optimal angepresst. Ausserdem ist die Herstellung des Befestigungselements wenig aufwändig.

Vorteilhaft ist der erste Bund als unterbruchsfrei umlaufender Vorsprung ausgebildet, wodurch die hülsenförmige Rondelle sicher unter dem Kopf gehalten ist, und ein Durchziehen des Kopfes beim Ausziehen des erfindungsgemässen Befestigungselements mittels eines Werkzeugs aus einem Werkstück verhindert ist.

Von Vorteil ist es ferner, wenn der zweite Bund als unterbruchsfrei radial aussen an der hülsenförmigen Rondelle bzw. an deren Hülsenabschnitt umlaufender Vorsprung ausgebildet ist. Hierdurch wird ein sicheres Angreifen eines Ausziehwerkzeugs an der hülsenförmigen Rondelle gewährleistet.

Vorteilhaft entspricht eine Rondellenhöhe der hülsenförmigen Rondelle dem ca. 0,1- bis 0,3-fachen einer ersten Höhe des Befestigungselements von der Spitze bis zum Kopf. Durch diese Massnahme bildet das Befestigungselement nach dem Setzvorgang eine Doppelkopf ähnliche Kopfform optimal nach. Diese ermöglicht es, mit einem Standardwerkzeug am Kopf anzugreifen und das Befestigungselement zu lösen und zu entfernen.

Günstig ist es ferner, wenn der Schaft wenigstens einen ersten Abschnitt grösseren Durchmessers und wenigstens einen zweiten Abschnitt kleineren Durchmessers aufweist, wobei die Rondellenhöhe der hülsenförmigen Rondelle dem ca. 0,4- bis 0,6-fachen einer zweiten Höhe des zweiten Abschnitts entspricht. Auch durch diese Massnahme bildet das Befestigungselement nach dem Setzvorgang eine Doppelkopf ähnliche Kopfform optimal nach.

In den Zeichnungen ist die Erfindung in mehreren Ausführungsbeispielen dargestellt.

Es zeigen:
- Fig. 1: ein Befestigungselement in teilweise geschnittener Seitenansicht,
- Fig. 2: ein weiteres Befestigungselement in teilweise geschnittener Seitenansicht.

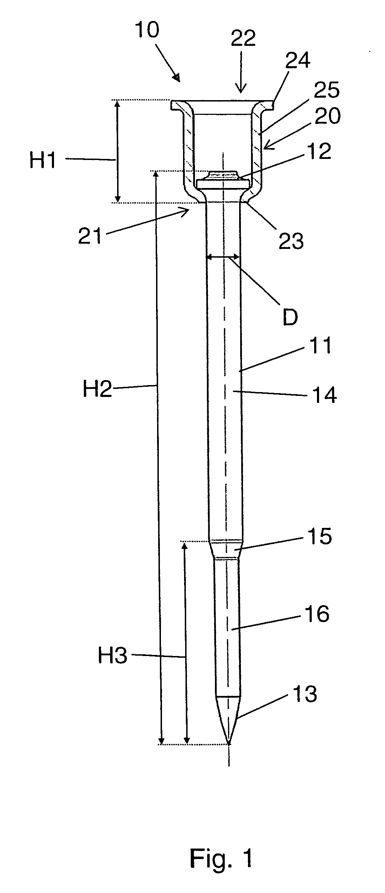

In Fig. 1 ist ein als Nagel ausgebildetes nagelförmiges Befestigungselement 10 wiedergegeben. Dieses Befestigungselement 10 weist einen Kopf 12, einen sich daran anschliessenden Schaft 11 und eine Spitze 13 an dem, dem Kopf 12 gegenüberliegenden Ende des Schaftes 11 auf. Der Schaft 11 weist drei Abschnitte 14, 15, 16 auf, einen ersten Abschnitt 14 grösseren Durchmessers D, einen zweiten Abschnitt 16 kleineren Durchmessers und einen zwischen dem ersten Abschnitt 14 und dem zweiten Abschnitt 16 angeordneten konischen Übergangsabschnitt 15. Auf den Schaft 11 ist eine hülsenförmige Rondelle 20 aufgezogen, die an einem der Spitze 12 zugewandten ersten Ende 21 einen den Öffnungsquerschnitt der hülsenförmigen Rondelle 20 verengenden ersten Bund 23 aufweist. An einem dem ersten Ende 21 gegenüberliegenden zweiten Ende 22 der hülsenförmigen Rondelle 20 weist diese einen umfänglich aussen angeordneten zweiten Bund 24 auf. Ein zwischen den beiden Enden 21, 22 liegender Hülsenabschnitt 25 weist eine kreiszylindrische Gestalt auf. Der Innendurchmesser des Hülsenabschnitts 25 ist dabei (bis auf im Bereich des ersten Bunds 23) wenigstens so gross wie der Aussendurchmesser des Kopfs 12. In dem dargestellten Ausführungsbeispiel ist der erste Bund 23 als unterbruchsfrei umlaufender Vorsprung ausgebildet, der den Öffnungsquerschnitt des Hülsenabschnitts 25 bzw. der hülsenförmigen Rondelle 20 verkleinert. Der erste Bund 23 bildet dabei ein Widerlager für den Kopf 12.

Der zweite Bund 24 ist als unterbruchsfrei radial aussen an dem Hülsenabschnitt 25 umlaufender Vorsprung ausgebildet und bildet ein Angriffselement für ein Ausziehwerkzeug, wie eine Zange, einen Hammer oder einen Geissfuss aus.

Sowohl der erste Bund 23 als wie auch der zweite Bund 24 können auch durch mehrere Vorsprünge gebildet werden, zwischen denen sich Freiräume bzw. Unterbrüche befinden (in den Figuren nicht dargestellt).

Eine Rondellenhöhe H1 der hülsenförmigen Rondelle 20 entspricht ca. dem ca. 0,1- bis 0,3-fachen einer ersten Höhe H2 des Befestigungselements 10 von der Spitze 13 bis zum Kopf 12. Ferner entspricht die Rondellenhöhe H1 der hülsenförmigen Rondelle 15 dem ca. 0,4-bis 0,6-fachen einer zweiten Höhe H3 des zweiten Abschnitts 16.

Bei der erfindungsgemäßen Befestigung eines Schalungsteils an einem Konstruktionselement, wie einem Betonelement, mittels des erfindungsgemässen gestuften nagelförmigen Befestigungselements 10 wird der erste Abschnitt 14 in das Betonelement eingetrieben während der zweite Abschnitt 16 des Schafts 11 das Schalungsteil durchsetzt. Das hülsenförmige Rondellenelement 20 liegt dann ausserhalb des Schalungsteils und liegt ggf. mit seinem ersten Bund 23 an der Oberfläche des Schalungsteils an. Mittels eines Ausziehwerkzeugs, das an dem zweiten Bund 24 des hülsenförmige Rondellenelements 20 angreifen kann, kann das nagelförmige Befestigungselement 10 zum Abbau der Schalung dann wieder ausgezogen werden.

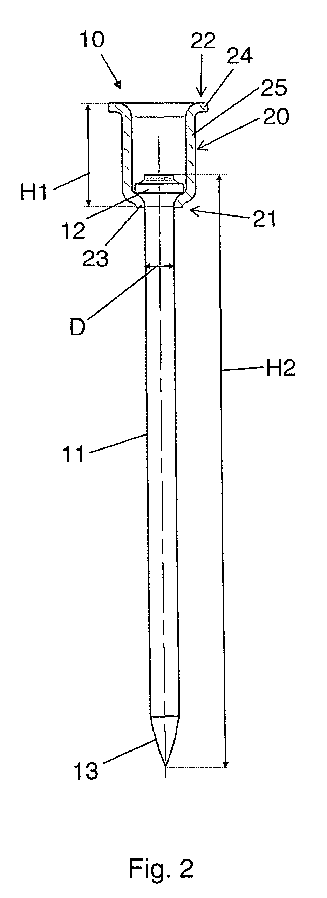

Das in Fig. 2 dargestellte Befestigungselement 10 unterscheidet sich lediglich dadurch von dem in Fig. 1 dargestellten Befestigungselement 10, dass dort der Schaft 11 zwischen der Spitze 13 und dem Kopf 12 einen innerhalb der Fertigungstoleranzen einheitlichen Durchmesser D aufweist. Auch bei diesem Befestigungselement 10 entspricht die Rondellenhöhe H1 der hülsenförmigen Rondelle 20 ca. dem ca. 0,1- bis 0,3-fachen der ersten Höhe H2 des Befestigungselements 10 von der Spitze 13 bis zum Kopf 12. Wegen weiterer hier nicht erwähnter Bezugszeichen wird vollumfänglich Bezug genommen auf die vorangehende Beschreibung zu Fig. 1.

## Patentansprüche

1. Verfahren zur vorübergehenden Befestigung eines Schalungsteils an einem Konstruktionselement, bei dem ein nagelförmiges Befestigungselement (10) mit einem Schaft (11), an dessen einem Ende eine Spitze (13) und an dessen gegenüberliegenden anderen Ende ein Kopf (12) angeordnet ist, und mit einer auf den Schaft (11) aufgezogenen hülsenförmigen Rondelle (20), wobei die hülsenförmige Rondelle (20) an einem der Spitze (12) zugewandten ersten Ende (21) einen den Öffnungsquerschnitt der hülsenförmigen Rondelle (20) verengenden ersten Bund (23) aufweist und an einem dem ersten Ende (21) gegenüberliegenden zweiten Ende (22) einen umfänglich aussen angeordneten zweiten Bund (24) aufweist, in das Konstruktionselement eingetrieben wird, wobei das Befestigunselement (10) nachfolgend mittels eines Ausziehwerkzeugs aus dem Konstruktionselement ausgezogen wird.

2. Verfahren nach Anspruch 1, **dadurch gekennzeichnet, dass** der erste Bund (23) als unterbruchsfrei umlaufender Vorsprung ausgebildet ist.

3. Verfahren nach Anspruch 1 oder 2, **dadurch gekennzeichnet, dass** der zweite Bund (24) als unterbruchsfrei radial aussen umlaufender Vorsprung ausgebildet ist.

4. Verfahren nach einem der Ansprüche 1 bis 3, **dadurch gekennzeichnet, dass** eine Rondellenhöhe (H1) der hülsenförmigen Rondelle (20) dem ca. 0,1- bis 0,3-fachen einer ersten Höhe (H2) des Befestigungselements (10) von der Spitze (13) bis zum Kopf (12) entspricht.

5. Verfahren nach einem der Ansprüche 1 bis 4, **dadurch gekennzeichnet, dass** der Schaft (11) wenigstens einen ersten Abschnitt (14) grösseren Durchmessers (D) und wenigstens einen zweiten Abschnitt (16) kleineren Durchmessers aufweist, wobei die Rondellenhöhe (H1) der hülsenförmigen Rondelle (20) dem ca. 0,4- bis 0,6-fachen einer zweiten Höhe (H3) des zweiten Abschnitts (16) entspricht.

6. Verfahren nach einem der Ansprüche 1 bis 5, **dadurch gekennzeichnet, dass** das Ausziehwerkzeug an dem zweiten Bund (24) des hülsenförmigen Rondellenelements (20) angreift.

## Claims

1. Method of temporarily fixing formwork to a structural element, wherein a nail-like fixing element (10) with a shank (11) that has a point (13) at one end and a head (12) at its opposite end, and with a sleeve-like washer (28) mounted on the shank (11), the sleeve-like washer (20) having a first collar (23) reducing the cross-section of the opening of the sleeve-like washer (20) at a first end (21) nearer the [head] (12) and a circumferentially externally arranged second collar (24) at a second end (22) opposite the first end (21), is driven into the structural element, the fixing element (10) subsequently being pulled from the structural element by means of an extractor tool.

2. Method according to Claim 1, **characterized in that** the first collar (23) is formed as a continuous circumferential [radially inward] projection.

3. Method according to Claim 1 or Claim 2, **characterized in that** the second collar (24) is formed as a continuous circumferential radially outward projection.

4. Method according to any one of Claims 1 to 3, **characterized in that** a height (H1) of the sleeve-like washer (20) is equal to approx. 0.1 to 0.3 times a first height (H2) of the fixing element (10) from its point (13) to its head (12).

5. Method according to any one of Claims 1 to 4, **characterized in that** the shank (11) has at least one first portion (14) of larger diameter (D) and at least one second portion (16) of smaller diameter, the height (H1) of the sleeve-like washer (20) being equal to approx. 0.4 to 0.6 times a second height (H3) of the second portion (16).

6. Method according to any one of Claims 1 to 5, **characterized in that** the extractor tool engages the second collar (24) of the sleeve-like washer element (20).

## Revendications

1. Procédé pour fixer temporairement une pièce de coffrage sur un élément de construction, dans lequel un élément de fixation en forme de clou (10) comportant une tige (11), à une première extrémité de laquelle est agencée une pointe (13) et à une seconde extrémité opposée de laquelle est agencée une tête (12), et comportant une rondelle en forme de douille (20) montée sur la tige (11), dans lequel la rondelle en forme de douille (20) comporte une première collerette (23) rétrécissant la section transversale d'ouverture de la rondelle en forme de douille (20) à une première extrémité (21) opposée à la pointe (12), et comporte une seconde collerette (24) agencée de manière circonférentielle vers l'extérieur à une seconde extrémité (22) opposée à la première extrémité (21), dans lesquelles l'élément de construction est enfoncé, l'élément de fixation (10) étant ensuite extrait de l'élément de construction au moyen d'un outil d'extraction.

2. Procédé selon la revendication 1, **caractérisé en ce que** la première collerette (23) est configurée sous la forme d'une saillie circonférentielle de manière continue.

3. Procédé selon la revendication 1 ou 2, **caractérisé en ce que** la seconde collerette 24 est configurée sous la forme d'une saillie circonférentielle de manière continue radialement vers l'extérieur.

4. Procédé selon l'une quelconque des revendications 1 à 3, **caractérisé en ce qu'**une hauteur de rondelle (H1) de la rondelle en forme de douille (20) correspond à environ 0,1 à 0,3 fois une première hauteur (H2) de l'élément de fixation (10) de la pointe (13) à la tête (12).

5. Procédé selon l'une quelconque des revendications 1 à 4, **caractérisé en ce que** la tige (11) a au moins une première partie (14) de plus grand diamètre (D) et au moins une seconde partie (16) de plus petit diamètre, dans lequel la hauteur de rondelle (H1) de la rondelle en forme de douille (20) correspond à environ 0,4 à 0,6 fois une seconde hauteur (H3) de la seconde partie (16) .

6. Procédé selon l'une quelconque des revendications 1 à 5, **caractérisé en ce que** l'outil d'extraction s'applique contre la seconde collerette (24) de l'élément de rondelle en forme de douille (20).
